# EUROPÄISCHE PATENTSCHRIFT

(11) **EP 1 337 765 B1**
(45) Veröffentlichungstag und Bekanntmachung des Hinweises auf die Patenterteilung: **29.08.2007**
(21) Anmeldenummer: 01980415.2
(22) Anmeldetag: 20.09.2001
(51) Int. Cl.: F16D 69/02

(54) **VERFAHREN ZUR HERSTELLUNG VON KERAMIKBREMSSCHEIBEN MIT EINEM EINLEGER IM GRÜNLING VOR DER PYROLYSE**
METHOD FOR PRODUCING CERAMIC BRAKE DISKS, WITH AN INSERT IN THE GREEN BODY BEFORE THE PYROLYSIS
PROCEDE POUR LA PRODUCTION DE DISQUES DE FREIN EN CERAMIQUE AVEC UNE INSERTION DANS L'EBAUCHE CRUE AVANT LA PYROLYSE

(30) Priorität: 18.10.2000 DE 10051808; 31.08.2001 DE 10142768
(43) Veröffentlichungstag der Anmeldung: 27.08.2003
(73) Patentinhaber: Menzolit Fibron GmbH, 75015 Bretten (DE)
(72) Erfinder: EHNERT, Gerd, F-32190 Vic Fezensac (FR)
(74) Vertreter: Lichti, Heiner
(86) Internationale Anmeldenummer: PCT/EP2001/010879
(87) Internationale Veröffentlichungsnummer: WO 2002/033285

(56) Entgegenhaltungen:
- EP-A- 0 863 328
- DE-A- 4 438 456
- DE-A- 19 834 571
- DE-C- 4 438 455

## Beschreibung

Die Erfindung betrifft ein Verfahren zur Herstellung von Keramikbremsscheiben.

Ein solches Verfahren ist aus der PCT/EP00/00253 bekannt. Bei diesem Verfahren wird aus SMC mit einer Matrix aus Kunstharz und mit Verstärkungsfasern aus Kohlenstoff in einem Werkzeug unter Druck- und Temperaturbeaufschlagung ein Grünling geformt. Anschließend wird dieser Grünling pyrolysiert zur Herstellung eines porösen Formkörpers. Als weiterer Verfahrensschritt erfolgt eine Schmelzinfiltration des porösen Formkörpers mit einer Schmelze, vorzugsweise mit einer Siliziumschmelze, zur Herstellung eines Formkörpers mit reaktionsgebundenen Fasern.

Der Grünling besteht bei diesem Verfahren aus zwei Einzelteilen, die durch die Schmelzinfiltration zu einem Teil verbunden werden.

Aus der DE 44 38 455 C1 ist ein Verfahren zur Herstellung von Keramikbremsscheiben bekannt, bei dem der Grünling einteilig hergestellt wird und zur Schaffung von definierten Hohlräumen in den Grünling vor der Pyrolyse einzelne Kerne eingelegt werden.

Der Erfindung liegt die Aufgabe zu Grunde, ein Verfahren zur Herstellung von Keramikbremsscheiben anzugeben, bei dem mit einfachen Mitteln kostengünstig ein einteiliger Grünling herstellbar ist, der nach der Pyrolyse sehr komplizierte innere Hohlräume aufweist und dadurch die nach der Schmelzinfiltration geschaffenen Keramikbremsscheiben eine Leichtbaukonstruktion aufweisen.

Erfindungsgemäß wird diese Aufgabe durch die Merkmale des Anspruchs 1 gelöst.

Ein wichtiges Merkmal der Erfindung ist, dass SMC mit einer Matrix aus Phenolharz verwendet wird und Verstärkungsfasern aus Kohlenstoff enthält. Die Länge dieser Kohlenstofffasern liegt zwischen 6 mm und endlos. Aus diesem speziellen SMC wird in einem Werkzeug (Presse) durch Druck- und Temperaturbeaufschlagung ein Grünling hergestellt.

Zur Schaffung sehr komplizierter Hohlräume im Grünling wird ein Sandwich aus SMC, thermoplastischem Einleger, und SMC in das Werkzeug gelegt und in einem Arbeitsschritt bearbeitet. Sandwich bedeutet in diesem Zusammenhang eine Schichtung mit einer unteren Lage SMC und einer oberen Lage SMC und einem dazwischen angeordneten Einleger.

Dieser thermoplastische Einleger füllt erfindungsgemäß den Grünling in seiner gesamten Fläche aus und ist dabei durch Durchbrüche so gestaltet, dass die obere und untere SMC-Lage zumindest stellenweise miteinander verbunden werden.

Bei der anschließenden Pyrolyse des Grünling fällt der Einleger in sich zusammen, so dass ein einteiliges Teil mit sehr komplizierten Hohlräumen geschaffen ist.

Anschließend erfolgt eine Schmelzinfiltration dieses porösen Formkörpers mit einer Schmelze, vorzugsweise mit einer Siliziumschmelze, zur Herstellung eines Formkörpers mit reaktionsgebunden Fasern. Dieser Formkörper stellt die eigentliche Keramikbremsscheibe dar.

In vorteilhafter Ausführungsform wird bei der Herstellung des Grünlings der Einleger vollständig vom SMC umflossen und eingeschlossen. Hierbei ist es dann erforderlich, dass vor der Pyrolyse der Einleger an den Seitenflächen durch mechanische Bearbeitung freigelegt wird. Durch diese Freilegung kann bei der Pyrolyse das freigesetzte Gas entweichen.

Wenn gewünscht können vor der Pyrolyse zusätzliche Durchbrüche zum Einleger im Grünling eingebracht werden. Diese Durchbrüche können rund oder jede andere Form aufweisen.

Zur Verbesserung einer Kühlwirkung kann die Oberfläche des Einlegers durch abstehende Kühlrippen am Einleger vergrößert werden. Im Grünling ist nach der Pyrolyse dadurch eine vergrößerte innere Oberfläche des bzw. der Hohlräume geschaffen worden.

Vorteilhafterweise ist der Einleger aus einem hochtemperaturbeständigen Thermoplast wie z.B. Polypropylen, Polycarbonat oder aus einem Polyamid hergestellt.

Weiter Merkmale der Erfindung ergeben sich aus den Figuren, die nachfolgend beschrieben sind. Es zeigt:
- Fig. 1: ein geöffnetes Werkzeug (Presse) zur Herstellung eines Grünlings mit eingelegtem SMC und Einleger vor dem Pressvorgang,
- Fig. 2: das gleiche Werkzeug nach Fig. 1 nach dem Pressvorgang,
- Fig. 3a, b: einen Einleger in zwei Schnitten,
- Fig. 4a, b: einen Grünling vor der Pyrolyse und vor der mechanischen Bearbeitung,
- Fig. 5a, b: einen Grünling vor der Pyrolyse und nach der mechanischen Bearbeitung,
- Fig. 6a, b: einen Grünling nach der Pyrolyse und
- Fig. 7a, b: verschiedenartige Ausgestattungen des Einlegers als Schnitte B - B in Figur 3.

Die nachfolgenden Figuren beschreiben das erfindungsgemäße Verfahren in einzelnen Schritten.

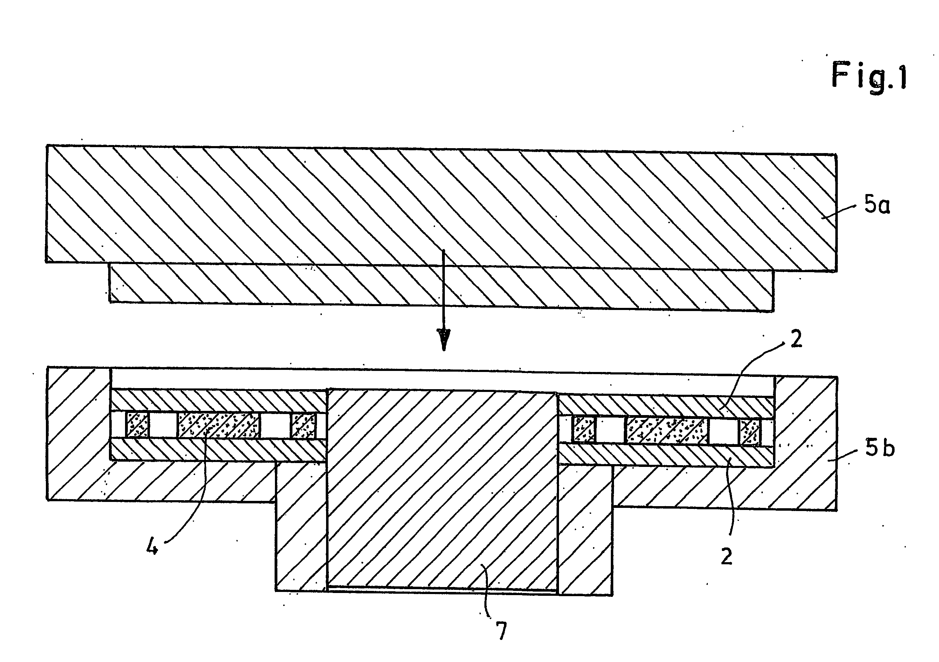

Fig. 1 zeigt ein geöffnetes Werkzeug 5a, 5b zur Herstellung eines Grünlings mit einem Oberteil 5a und einem Unterteil 5b, welches als Presse funktioniert. In das Unterteil 5b wird um einen Stempel 7 ein Sandwich aus SMC 2 und Einleger 4 gelegt, wobei zwischen zwei Lagen SMC 2 ein Einleger 4 eingelegt ist. Dieser Einleger 4 wird weiter unten beschrieben.

Der Pressvorgang geschieht unter Druck- und Temperaturbeaufschlagung durch Pressen des Oberteils 5a auf das Unterteil 5b.

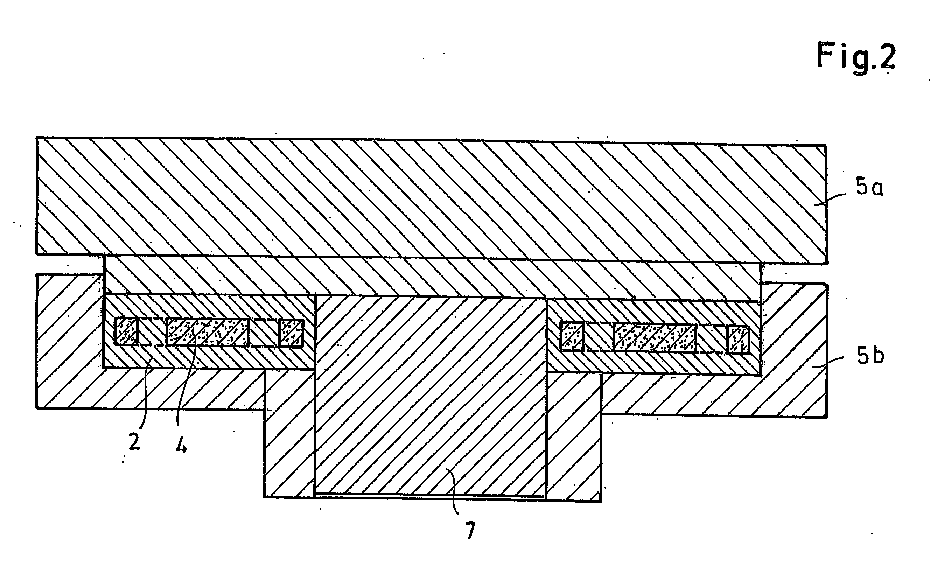

Fig. 2 zeigt das Werkzeug 5a, 5b nach dem Pressvorgang. Das SMC 2 hat sich unter der Druck- und Temperaturbeaufschlagung verflüssigt und umschließt den Einleger 4 vollständig. Nach dem Aushärtevorgang ist der Grünling fertiggestellt und muss nur noch aus dem Werkzeug 5a, 5b genommen werden.

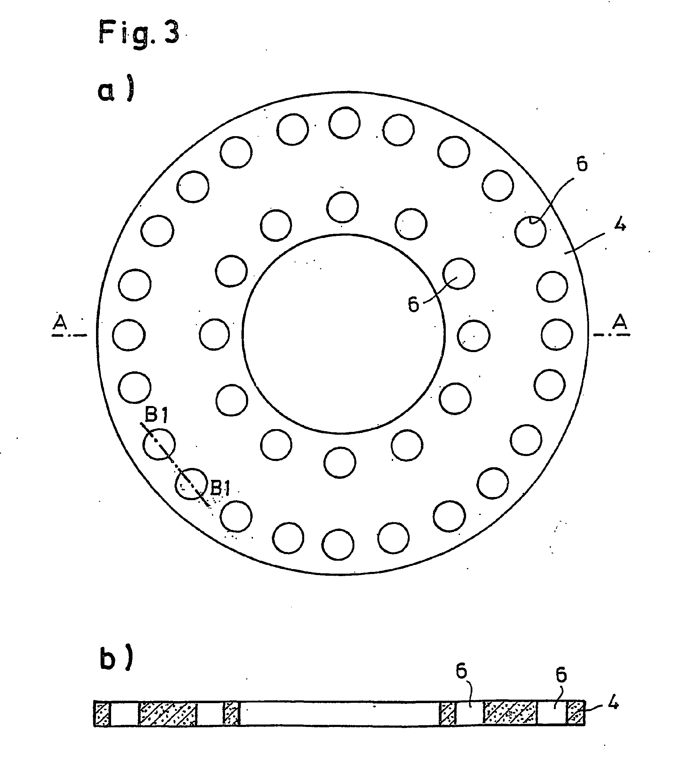

Die Fig. 3a, 3b zeigen in zwei Schnitten den Einleger 4. Der Einleger 4 ist vorteilhaft aus einem Polyamid hergestellt, d. h. besteht aus einem Thermoplast. Er ist so gestaltet, dass er den Grünling in seiner gesamten Fläche ausfüllt und dabei Durchbrüche 6 aufweist, wodurch die untere und obere SMC-Lage (siehe Figuren 1, 2) zumindest stellenweise verbunden sind.

In der hier gezeigten Ausführungsform enthält der Einleger 4 auf zwei zueinander angeordneten konzentrischen Kreisen um den Mittelpunkt des Einlegers gleichmäßig verteilte Bohrungen als Durchbrüche 6. Der innere Kreis enthält hierbei 12 Durchbrüche 6 und der äußere Kreis 24 Durchbrüche 6. Fig. 3b zeigt einen Schnitt entlang der Linie A - A in Figur 3a.

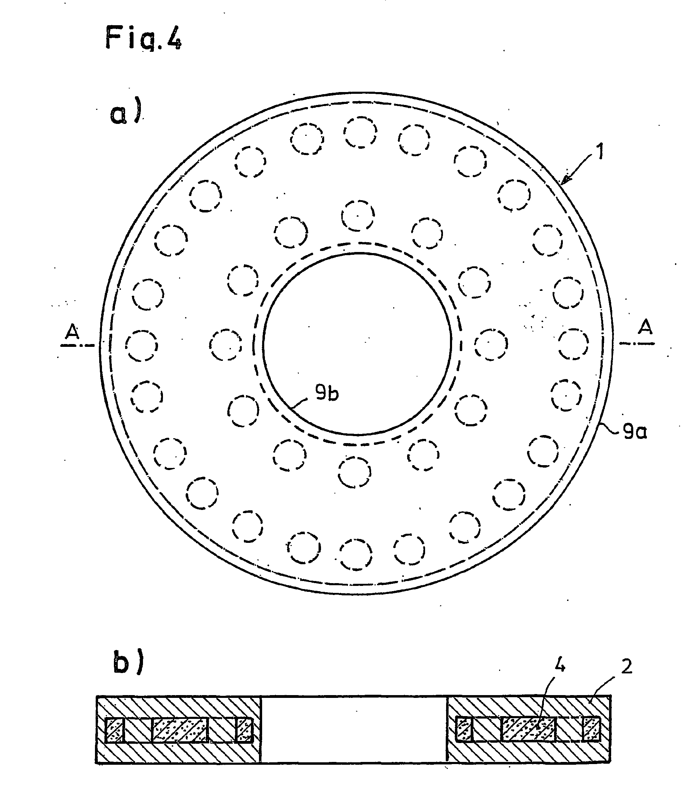

Fig. 4a, b zeigt einen fertigen Grünling 1 vor der Pyrolyse, d. h. nach dem Pressvorgang, wie er in den Figuren 1; 2 gezeigt ist. Figur 4b zeigt wieder einen Schnitt entlang der Linie A - A in Figur 4a. Es ist gut zu erkennen, dass der Einleger 4 vollständig vom SMC 2 umschlossen ist.

In diesem Stadium können Durchbrüche (nicht gezeigt) zum Einleger durch das SMC 2 eingebracht werden.

Vorteilhafterweise wird der Grünling 1 vor der Pyrolyse jedoch an den Seitenflächen 9a, 9b mechanisch bearbeitet und zwar so, dass der Einleger an den Seitenflächen 9a, 9b freigelegt ist. Dies hat den Vorteil, dass bei der Pyrolyse kein unerwünschter hoher Druck im Inneren des Grünlings 1 auftreten kann.

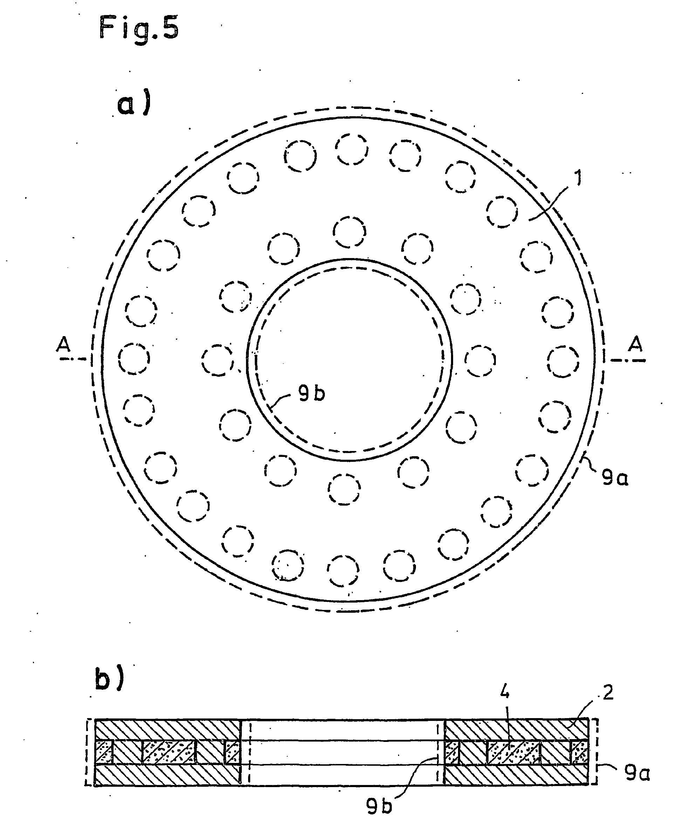

Die Figuren 5a, 5b zeigen den Grünling 1 nach dieser mechanischen Bearbeitung. Gestrichelt ist der Zustand der Seitenflächen 9a, 9b vor der mechanischen Bearbeitung angedeutet. Wesentlich ist hierbei, dass der Einleger 4 nach der Bearbeitung freiliegt. Fig. 5b zeigt wieder einen Schnitt entlang der Linie A - A in Fig. 5a.

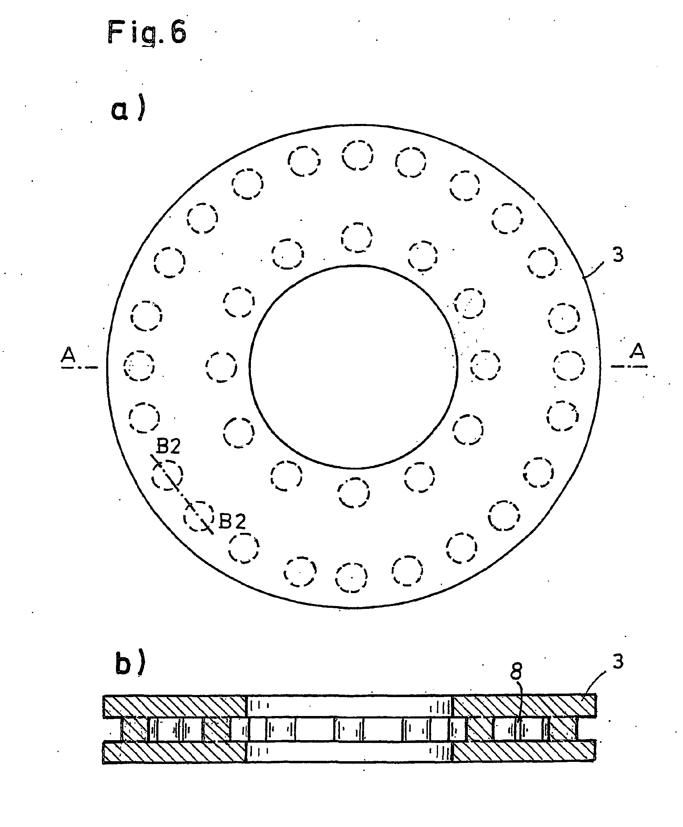

Fig. 6 zeigt den Grünling nach der Pyrolyse, d. h. es ist jetzt ein poröser Formkörper 3 hergestellt. Fig. 6b zeigt wieder einen Schnitt nach der Linie A - A in Figur 6a. Der Einleger ist vollständig pyrolisiert und ist damit verschwunden. Dort wo sich im Grünling der Einleger befand ist nun ein Hohlraum bzw. sind Lüftungskanäle 8 entstanden. Die Durchbrüche im Einleger sind nun die Verbindungsstellen zwischen der oberen und unteren Lage SMC.

Als letzten Arbeitsschritt wird der poröse Formkörper 3 einer Schmelzinfiltration unterworfen mit einer Schmelze, vorzugsweise mit einer Siliziumschmelze zur Herstellung eines Formkörpers mit reaktionsgebundenen Fasern. Dieser Formkörper stellt dann die eigentliche Bremsscheibe dar. Das äußere Erscheinungsbild ist identisch mit den Figuren 6a, 6b.

Zur Vergrößerung der Oberfläche der Lüftungskanäle 8 und damit zur Verbesserung der Kühlwirkung weist der Einleger vorteilhafterweise im Bereich der Durchbrüche eine Form auf, die später eine vergrößerte Oberfläche in der fertigen Bremsscheibe bedingt.

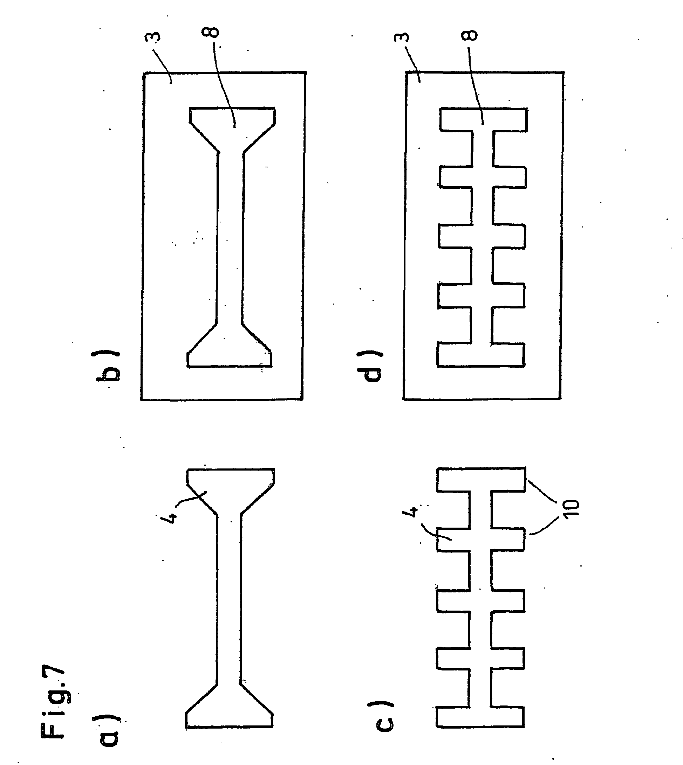

Die Figuren 7a, 7c zeigen beide in einem Schnitt nach der Linie B1 - B1 in Figur 3a derartige Ausgestaltungen der Durchbrüche im Einleger 4. Figur 7a zeigt die Form eines Hundeknochens und Figur 7c eine Form mit senkrecht abstehenden Kühlrippen 10.

Die Figuren 7b, 7d zeigen in einem Schnitt nach der Linie B2 - B2 in Figur 6a das Ergebnis dieser speziellen Ausgestaltungen des Einlegers 4, d. h. den Zustand nach der Pyrolyse, wodurch die Lüftungskanäle 8 entstanden sind. Dort wo sich vorher der Einleger 4 befand, ist jetzt der Lüftungskanal 8 im porösen Formkörper 3 angeordnet.

## Patentansprüche

1. Verfahren zur Herstellung von Keramikbremsscheiben aus einem Grünling (1) bestehend aus SMC (2) mit einer Matrix aus Phenolharz und mit Verstärkungsfasern aus Kohlenstoff, wobei die Länge der Kohlenstofffasern zwischen 6 mm und endlos liegt, und Pyrolisieren des Grünlings (1) zur Herstellung eines porösen Formkörpers (3) und anschließender Schmelzinfiltration des porösen Formkörpers (3) mit einer Schmelze, vorzugsweise mit einer Siliziumschmelze, zur Herstellung eines Formkörpers mit reaktionsgebundenen Fasern, umfassend folgende Verfahrensschritte:
- Herstellen des Grünlings (1) aus einem Sandwich aus SMC (2), thermoplastischem Einleger (4), SMC (2) in einem Arbeitsschritt in einem Werkzeug (5a, 5b) unter Druck- und Temperaturbeaufschlagung,
- wobei der Einleger (4) den Grünling (1) in seiner gesamten Fläche ausfüllt und dabei durch Durchbrüche (6) so gestaltet ist, dass die obere und untere SMC-Lage (2) zumindest stellenweise miteinander verbunden werden.

2. Verfahren nach Anspruch 1, **dadurch gekennzeichnet, dass** bei der Herstellung des Grünlings (1) der Einleger (4) vollständig vom SMC (2) umflossen und eingeschlossen wird.

3. Verfahren nach Anspruch 2, **dadurch gekennzeichnet, dass** vor der Pyrolyse des Grünlings (1) der Einleger (4) an den Seitenflächen durch mechanische Bearbeitung freigelegt wird.

4. Verfahren nach einem der Ansprüche 1 bis 3, **dadurch gekennzeichnet, dass** vor der Pyrolyse im Grünling (1) zusätzliche Durchbrüche zum Einleger eingebracht werden.

5. Verfahren nach einem der Ansprüche 1 bis 4, **dadurch gekennzeichnet, dass** am Einleger (4) abstehende Kühlrippen angeordnet sind.

6. Verfahren nach einem der Ansprüche 1 bis 5, **dadurch gekennzeichnet, dass** der Einleger (4) aus einem hochtemperaturbeständigen Thermoplast wie z.B. Polypropylen, Polycarbonat oder aus einem Polyamid hergestellt wird.

## Claims

1. A process for producing ceramic brake disks from a green compact (1) consisting of SMC (2) with a matrix consisting of phenolic resin and with reinforcing fibres consisting of carbon, the length of the carbon fibres being between 6 mm and endless, and pyrolysing the green compact (1) for the purpose of producing a porous moulded article (3) and subsequent melt infiltration of the porous moulded article (3) with a melt, preferably with a silicon melt, for the purpose of producing a moulded article with reaction-bonded fibres, comprising the following process steps:
- producing the green compact (1) from a sandwich consisting of SMC (2), thermoplastic insert (4), SMC (2) in a working step in a tool (5a, 5b) subject to the application of pressure and temperature,
- whereby the insert (4) fills out the green compact (1) in its entire expanse and at the same time is fashioned by apertures (6) in such a way that the upper and lower SMC layers (2) are connected to one another at least in places.

2. Process according to Claim 1, **characterised in that** in the course of production of the green compact (1) the insert (4) is completely flowed around and enclosed by the SMC (2).

3. Process according to Claim 2, **characterised in that** prior to pyrolysis of the green compact (1) the insert (4) is exposed on the lateral faces by machining.

4. Process according to one of Claims 1 to 3, **characterised in that** prior to pyrolysis additional apertures to the insert are introduced in the green compact (1).

5. Process according to one of Claims 1 to 4, **characterised in that** projecting cooling fins are arranged on the insert (4).

6. Process according to one of Claims 1 to 5, **characterised in that** the insert (4) is produced from a high-temperature-resistant thermoplastic - such as, for example, polypropylene, polycarbonate - or from a polyamide.

## Revendications

1. Procédé de fabrication de disques de frein en céramique à partir d'une ébauche (1) composée d'un préimprégné SMC (2) dont la matrice est de la résine phénolique et les fibres de renfort sont en carbone, la longueur des fibres de carbone allant de 6 mm à l'infini, avec pyrolyse de l'ébauche (1) pour obtenir un corps (3) poreux, suivi de l'infiltration du corps poreux (3) par une masse fondue, de préférence du silicium fondu, pour fabriquer un corps formé avec des fibres liées par réaction, ledit procédé englobant les phases suivantes :
- Fabrication de l'ébauche (1) à partir d'un sandwich composé de SMC (2), d'un intercalaire thermoplastique (4), de SMC (2) en une étape dans un outil (5a, 5b), le tout soumis à pression et à température,
- L'intercalaire (4) fourrant l'ébauche (1) sur toute sa surface et présentant des ajours (6) de manière que les couches SMC (2) supérieure et inférieure soient, au moins par endroit, reliées entre elles.

2. Procédé selon la revendication 1, **caractérisé en ce que**, lors de la fabrication de l'ébauche (1) l'intercalaire (4) est entièrement noyé et enveloppé par le SMC (2).

3. Procédé selon la revendication 2, **caractérisé en ce qu'**avant la pyrolyse de l'ébauche (1) l'intercalaire (4) est mis à nu sur les côtés par usinage mécanique,

4. Procédé selon une des revendications 1 à 3, **caractérisé en ce qu'**avant la pyrolyse, des ajours supplémentaires sont réalisés dans l'ébauche (1) vers l'intercalaire.

5. Procédé selon une des revendications 1 à 4, **caractérisé en ce que** des nervures de refroidissement s'éventent sur l'intercalaire (4).

6. Procédé selon une des revendications 1 à 5, **caractérisé en ce que** l'intercalaire (4) est fabriqué en un thermoplastique résistant aux hautes températures tel le polypropylène, le polycarbonate ou du polyamide.
